# EUROPEAN PATENT SPECIFICATION

(11) **EP 0 385 600 B1**
(45) Date of publication and mention of the grant of the patent: **24.07.1996**
(21) Application number: 90301415.7
(22) Date of filing: 09.02.1990
(51) Int. Cl.: G01S 5/06, G01S 13/78, G01S 13/76

(54) **System for tracking an aircraft over an area**
System zum Folgen eines Flugzeuges über einer Fläche.
Système pour poursuivre un avion dans une région.

(30) Priority: 10.02.1989 US 308594
(43) Date of publication of application: 05.09.1990
(73) Proprietor: CARDION, INC., Woodbury, NY 11797 (US)
(72) Inventor: Schwab, Carl E., Huntingdon Station, New York 11746 (US); Goodrich, Fred, N.S., Barnstead, New Hampshire 03218 (US)
(74) Representative: Milhench, Howard Leslie

(56) References cited:
- DE-A- 2 460 645
- US-A- 3 419 865
- US-A- 3 518 674
- PHILIPS RESEARCH REPORTS, vol. 24, no. 2, supplements 1969, chapter 4, pages 36-69, Eindhoven, NL; C.G.H. SCHOLTEN: "Elements for a new departure in air-traffic control"

## Description

The present invention relates to systems for and method of tracking over an area an aircraft which is equipped with a transponder adapted upon interrogation by a transmitter to emit a signal identifying the aircraft.

Training of military pilots requires that the pilot know how to manoeuvre and react to defensive ground installations. These ground installations typically include ground to air missiles which are radar-guided. When a pilot encounters hostile territory, the aircraft will be illuminated with ground radar pulses. The pilot must be trained to effectively manoeuvre the aircraft to avoid the consequences, i.e., missiles which are fired in response to position information derived from these radar signals. The aircraft is equipped with electronic warfare equipment which identifies when the aircraft is being illuminated by such radar. The pilot must enter into an active jamming role and evasive manoeuvring routine to avoid the consequences of such ground defence systems.

To effectively train combat pilots, training flights are conducted over training areas which include simulated missile defence systems. These simulated missile defence systems include radar beacons which simulate the fire control radar of missile defence systems.

In order to evaluate a pilot's performance under these training conditions, it is necessary to accurately monitor the aircraft's position as it proceeds through the test area. Presently, this position is obtained through precision ground based tracking radar, or cooperative electronic pods on the aircraft. During the training flight, the position of the aircraft is continuously monitored, and the performance of the pilot in carrying out evasive measures is monitored.

The radar tracking systems for position tracking of military aircraft over these training sites is expensive. Relocating the test site to provide different terrain in which a pilot is to train requires relocation of these sophisticated ground track radars. The expense and complications associated with re-establishing a new test site are avoided by a tracking system which is provided in accordance with this invention.

### Summary of the Invention

It is a primary object of this invention to provide a system for and method of tracking for monitoring the position of military aircraft over a test area.

It is another object of this invention to provide for the accurate position determination of military aircraft during a training exercise without burdening the aircraft with large amounts of additional electronic equipment.

These and other objects are accomplished, in accordance with the present invention as defined in the appended system claim 1 and the method claim 16. The system claim defines a system for tracking over an area an aircraft which is equipped with a transponder adapted upon interrogation by a transmitter to emit a signal identifying the aircraft, said system comprising: at least three ground stations spaced apart from each other, said ground stations each being equipped with a receiver for receiving signals from said transponder; a communication link connecting said ground stations; and means for receiving information over said communication link identifying the times of arrival at said ground stations of a signal transmitted from said transponder in response to interrogation thereof and for calculating from said times of arrival the position of said aircraft; said system being characterized in that a squitter transmitter is mounted on said aircraft for interrogating said transponder to cause said signal to be transmitted.

An air traffic control system which meets the terms of the pre-characterizing part of claim 1 (as set forth above) is described in PHILLIPS RESEARCH REPORTS, Vol 24, Supplements, 1969 No. 2 in an article entitled "Elements for a New Departure in Air-Traffic Control" by C.G.H. Scholten. The Scholten system also discloses the provision of a transmitter for interrogating the aircraft transponder, but the transmitter is a ground-based transmitter and not, as in the present invention, a transmitter on-board the aircraft. The Scholten system is a permanent air-traffic control system and is not well adapted to satisfy the objects of the present invention. In particular, the Scholten system neither addresses nor solves the relocation problems aforementioned.

The present invention as described in the following with reference to specific embodiments makes use of conventional transponder equipment located on board the aircraft as a source of tracking data. Emissions from the aircraft transponder are used in an inverse Loran position determining system for establishing longitudinal and latitudinal co-ordinates for the aircraft. In the inverse Loran positioning system, a plurality of receiving stations are positioned around the test range. Aircraft flying through the test range include a squitter transmitter which will interrogate a conventional airborne IFF transponder to transmit its altitude and identity to the ground receiving stations. The ground receiving stations have accurate clocks which are synchronised with each other. The synchronised receiving stations note the time of arrival of a transmission from the on-board transponder of the aircraft.

In the preferred embodiment of the invention, each of the receive stations are linked to a master receive station through a wide band data link. This two-way data link will permit the master station to calibrate the remote station clocks, as well as receive data emitted by the aircraft passing through the test site identifying the time of arrival of transponder transmissions to the receiving stations.

Using Loran techniques, the master can calculate X-Y coordinates for the aircraft from time of arrival information produced from each of the respective receive stations. Additionally, altitude information, which is transmitted as part of the reply of the IFF transponder, is available to constantly monitor the height of the aircraft.

Using the foregoing system, the aircraft need only include a small squitter transmitter for interrogating the standard IFF transponder on the aircraft. The squitter transmitter may be configured to interrogate the IFF transponder on an asynchronous basis, which reduces the possibility of collisions with replies from other aircraft transponders in the general vicinity.

In other embodiments of the invention, it is possible to cross-link a TACAN interrogating system on the aircraft with the IFF transponder. In this embodiment, the transmission of a TACAN pulse is used to initiate interrogation of the aircraft IFF transponder. Each of the receive locations receive not only the IFF reply containing altitude data, but the TACAN pulse. If each aircraft is previously assigned a TACAN frequency, the altitude and TACAN frequency may be correlated so that the identity of the aircraft is known.

The foregoing system permits configuration of a test site without requiring active radar, with precision positioning pedestals and communication systems for accurately monitoring the aircraft position.

According to another aspect of the present invention there is provided a method of tracking over an area an aircraft which is equipped with a transponder adapted upon interrogation by a transmitter to emit a signal identifying the aircraft, said method comprising: providing at least three ground stations at spaced-apart locations of said area, said ground stations each being equipped with a receiver for receiving signals from said transponder and being connected by a communication link; periodically interrogating the on-board transponder of an aircraft in the area so that the transponder periodically transmits said identification signal; deriving time of arrival information indicative of the times of arrival at said ground stations of said signal transmitted from said transponder; and assembling said times of arrival information over said communication link and calculating therefrom the position of said aircraft; the method being characterized in that the aircraft transponder is interrogated by a squitter transmitter on the aircraft.

The above and other features of the present invention are set forth in the appended claims and will be well understood from consideration of the following detailed description given with reference to the accompanying drawings which show embodiments of the invention.

### Description of the Drawings

Figure 1 illustrates a system layout for arranging a training site which accurately determines the position of aircraft during training in an electronic warfare environment.

Figure 2 illustrates on board aircraft equipment which enables an IFF transponder to serve as a radio beacon for tracking the aircraft.

Figure 3A illustrates the interrogation modes available in standard IFF transponder equipment.

Figure 3B illustrates transponder reply codes which are generated in response to interrogation pulses.

Figure 4 illustrates the typical receiving station used to derive position information of aircraft during training manoeuvres.

Figure 5 is a block diagram of the master receive station for the training site.

Figure 6 illustrates in greater detail the arrangement of a receive location, message assembler and calibration equipment.

Figure 7 illustrates aircraft equipment which uses the TACAN and IFF cross-linked transponder for use as a second embodiment of the invention.

Figure 8 illustrates the receive installation for a TACAN IFF cross-linked application.

### Description of the Preferred Embodiment

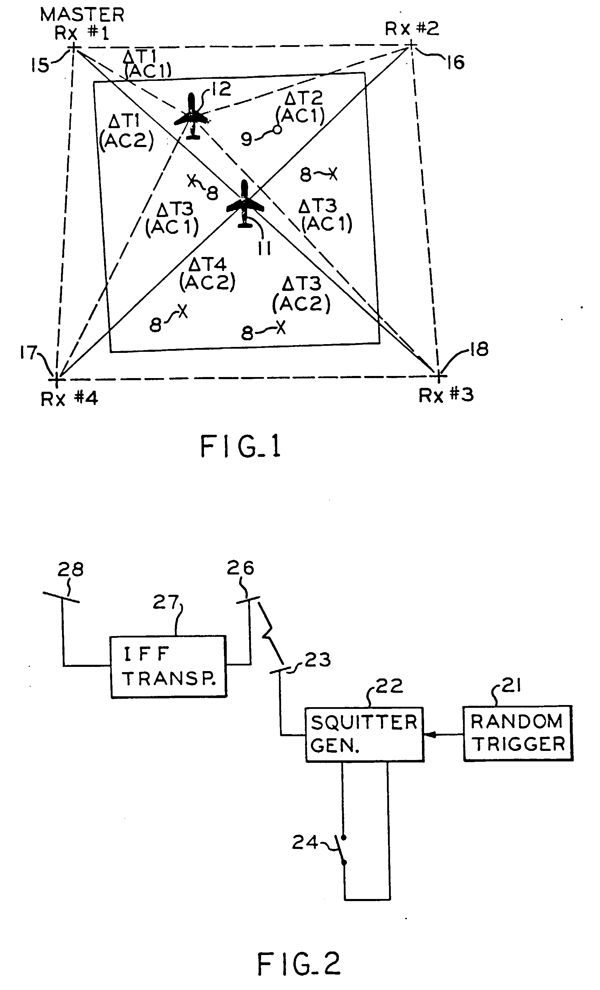

Referring now to Figure 1, there is shown an aircraft training site employing an embodiment of the present invention. The aircraft training site has boundaries which are identified by a quadrilateral, the corners of each quadrilateral including a receive station 15, 16, 17 and 18. One of the receive stations, 15, is a master station which, via a two-way communication link, collects data from the other receive stations.

During use, the training site will include several ground radar simulating sources 8. The aircraft 11, 12 will fly against the radar simulating beacons and exercise evasive manoeuvres.

In carrying out such training exercises, it is necessary to accurately know the aircraft position during its flight through the training site.

The on-board transponder equipment, such as the conventional IFF transponders contained on military aircraft, as well as commercial aircraft, is periodically interrogated by a squitter transmitter, also fixed to the aircraft 11, 12. The interrogated transponder transmits the required reply containing altitude information and identification information of the aircraft.

Each of the receive stations 15, 16, 17 and 18 includes a local clock, synchronized with the master station 15 local clock. The time of arrival for the transponder transmissions are noted at each station, and transmitted to the master station 15 via a communication links. The time of arrival, as is known from conventional Loran principles, can be used from a minimum of three (3) stations to determine the location of the aircraft in longitude and latitude. Additional stations may be employed, giving redundancy and an increase in accuracy of position measurement.

Time of arrival information is used in other Loran type navigation systems. As explained in U.S. Patent No. 4,688,046, two receiving stations can define a line of position for an aircraft based on a difference in time of arrival of a radio transmission from an aircraft. The position along the line can be identified by a third receiving station which permits the creation of a second line of position which intersects the first line of position.

The master station 15 includes a computer which will build a table of time of arrival measurements for each of the receive locations as the aircraft proceeds through the training site. The master station will determine the aircraft position for each instant of time the aircraft is over the training site. The IFF transponder transmits an altitude measurement as part of its reply to the interrogation pulse, as well as aircraft identity, so that the time of arrival information, for determining the longitude and latitude of the aircraft as well as altitude information is available for assessment of the training exercise.

In the preferred embodiment, a squitter transmitter is attached to the aircraft to interrogate the IFF transponder, which is conventionally provided on the aircraft, at periodic intervals. This makes use of the available IFF transponder without burdening the aircraft with additional hardware. The squitter transmitter is a small package which is fastened to the aircraft strut or weapon holder by conventional means.

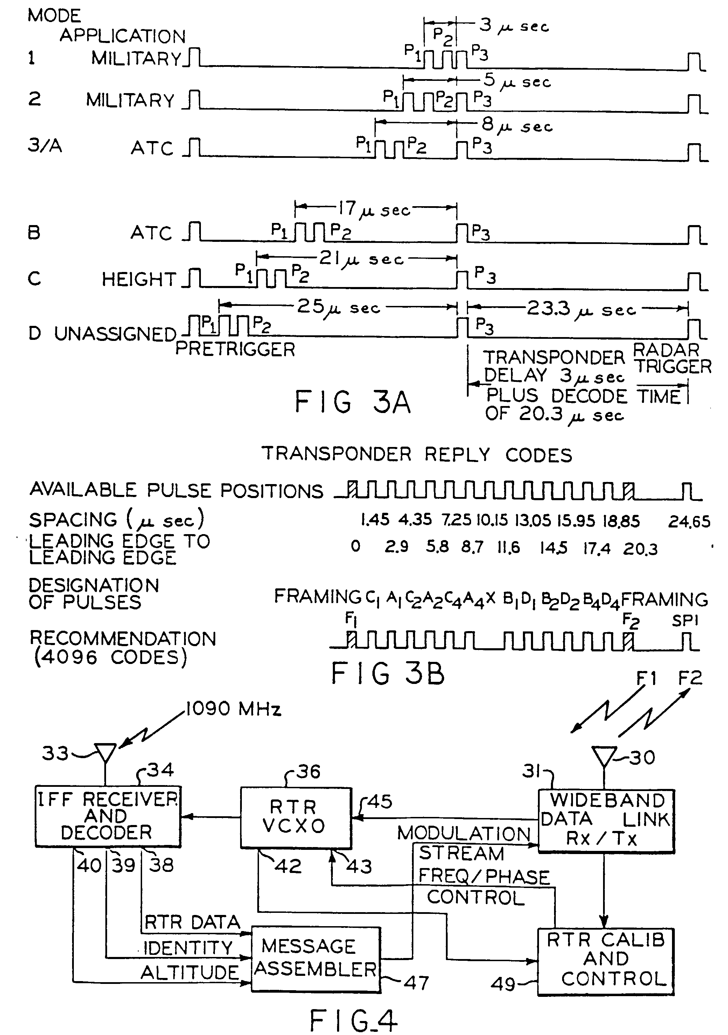

Referring to Figure 2, there is shown the equipment package carried by the aircraft for emitting standard IFF replies on a periodic basis. The squitter generator 22 will produce the standard interrogation pulses as shown in Figure 3A on a random basis. Using a random trigger 21, the squitter generator 22 is enabled on a random basis. By randomizing the interrogation of the IFF transponder 27, the possibility of collisions with the replies from other aircraft in the vicinity of the one of interest can be avoided.

The squitter generator 22 includes a small antenna 23 for radiating to antenna 26 of the IFF transponder 27. The squitter generator 22 and random trigger 21 is conveniently mounted in an area of the aircraft, which would permit reliable interrogation of the IFF transponder 27. The squitter package may be conveniently mounted on the armament support which is provided on military aircraft. Power is conventionally supplied on these armament supports and is used to power the squitter generator 22 and random trigger 21 of Figure 2.

As shown in Figure 3A, the squitter package of Figure 2 could emit mode C interrogation pulses so that the height of the aircraft would be repeatedly reported to the ground. The squitter package 21, 22 interrogate the transponder in accordance with modes A and C. Mode A will initiate interrogation pulses P₁, P₂ and P₃ as shown in Figure 3A.

This will initiate a transponder reply as shown in Figure 3B, having a pulse pattern which defines the identity of the aircraft. Mode C interrogations follow 125 microseconds later which generate a transponder reply which contains data identifying the height of the aircraft. The spacing between the successive pairs of replies is nominally 50,000 microseconds, however, an internal time base generator is combined with the pseudorandom trigger generator 22 so that the actual period varies in a statistically random manner.

Triggering the transponder 27 in this way will reduce the likelihood of collisions on aircraft which are physically close to each other, and have randomly triggered transponder 27 transmissions.

The ground stations of Figure 1 collect and correlate the received identity information from mode 3-a interrogation and height information from mode C interrogation. This data will be received in a constant 125 microsecond interval, making it easy for each of the ground stations to correlate the aircraft identity with its height.

The squitter generator 22 may include a disable switch 24 connected to the squitter generator 22. The disable switch 24 is enabled once the aircraft has returned to the ground, thus disabling squittering of the IFF transponder 27 until another training run commences. Switch 24 may be connected to the landing gear and operated when the aircraft is on the ground.

A block diagram of the remote receiving sites 16, 17 and 18 are shown in Figure 4. Figure 4 illustrates a wide band data link transmit/receive station 31 connected to an antenna 30 which is a microwave antenna, positioned to communicate with the master receive station 15. The wide band data link will permit synchronization of local clocks 36 at each of the remote receive locations with the master clock at the master station 15. Additionally, the recovered reply data from the IFF transponders and time of arrival information is transmitted back to the master station 15 over this wide band data link.

The replies from the IFF transponder 27 are received on antenna 33 at the conventional IFF reply frequency of 1090 MHz. The IFF receiver and decoder 34 will provide for three different quantities of data. The conventional identity and altitude data transmitted as part of the mode interrogation of the aircraft transponder 27 is decoded and supplied to output ports 39 and 40. The time of arrival of the altitude or identity information is computed for each transmission of the transponder reply. This time of arrival data appears on output port 38.

The time of arrival data is that time noted by the IFF receiver when the framing pulses of a reply are received. A counter within the IFF receiver 34, which is under control of real time clock 36, will note the occurrence of each pulse event received and will be cleared following the successful decode of both identity and altitude information. Thus, a time of arrival for the pulse train may be computed based on a running average of framing pulse arrivals or on the arrival of any of the identity or altitude data, as selected by the system designer.

A message assembler 47 will compose the real time arrival data, identity data and altitude data into a message for modulating on the carrier signal of the wide band communication link. The wide band communication link station 31 will receive this modulation stream and transmit it to the master station 15.

In order for the master station to receive correlated time of arrival data for each of the receive locations, it is required that the real time clock 36 at each receive location be in synchronism. Thus, during a calibration sequence, the wide band data link will provide calibration data from the master station 15 used to synchronize each clock 36 at each receive location, so that during actual test runs, the time of arrival data from each receiver is synchronized with each other receiver.

A real time clock calibration and control network 49, to be described in greater detail, is used during a calibration interval to receive clock data from the wide band data link, decode the same and provide a frequency/phase control signal 43 to the real time clock 36. This frequency/phase control signal is the result of comparing the actual time of the real time clock 36 via output port 42 with a received real time from the master station 15. In this way, each of the real time receive clocks 36 can be synchronized.

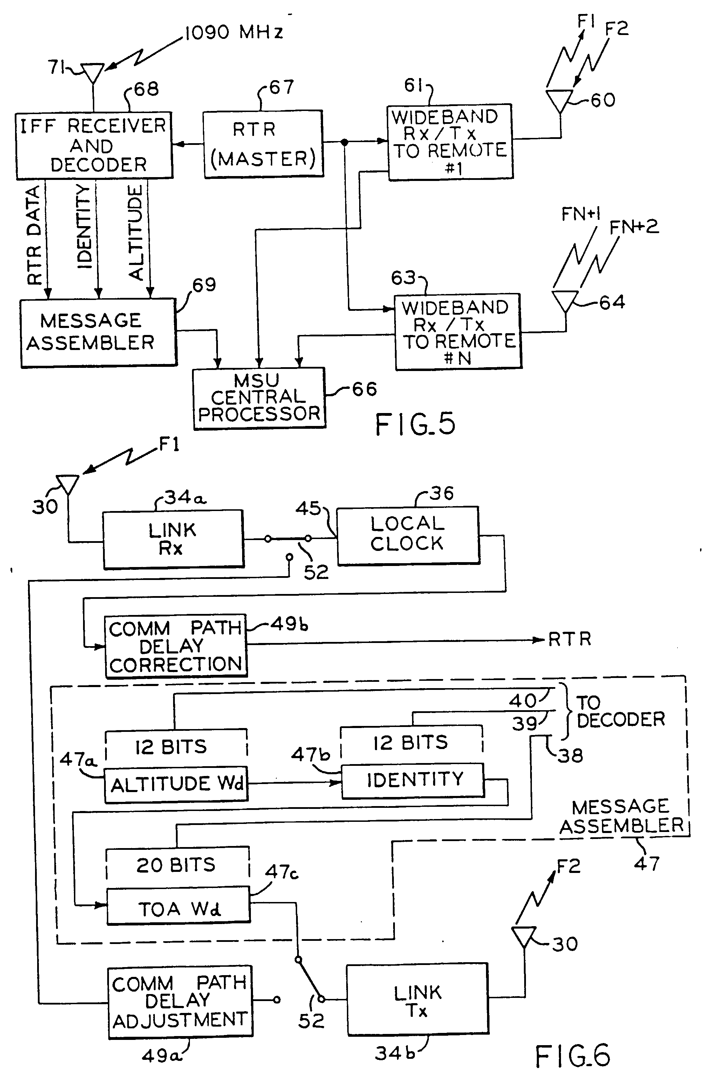

The master receive station is shown in Figure 5 which, is very similar to the remote receive stations of Figure 4. An IFF receiver 68, connected to an IFF antenna 71, receives at the master location, both time of arrival data, and identity and altitude information from a transponder reply. The message assembler 69 arranges this message in a frame which can be delivered to a central processor 66.

Similar messages are received from each of three remote receive locations, via individual data links. A wide band data link comprising the transmit/receive station 61 is used to communicate with the first remote receive location. Additional data link stations 63 communicate with the remaining remote receive locations.

The central processor 66 can collect the assembled data package comprising altitude, identity and time of arrival data from each of the remote locations. The central processor 66 is a general purpose digital computer which includes a table for each receive station storing the most recent packet of received position and identity data from each receive location.

Thus, four tables can be built within the central processor 66 which will identify the identity and corresponding altitude and time of arrival data for each aircraft entering the training site. These tables can maintain time of arrival data for more than one aircraft since each time of arrival is correlated with each aircraft identity.

It is also possible to include a computer program which will calculate aircraft heading and ground speed from the position coordinates which are continuously calculated from time of arrival information. Thus, using change in position data both the related air speed and bearing may be calculated.

As those familiar with Loran technology will appreciate, latitude and longitude may be computed from time of arrival data obtained at three receive locations. The fourth time of arrival data can be used to permit a series of calculations to be accomplished between combinations of three receive stations. Any errors in data can be discarded in favor of the three most correlated computations for longitudinal and latitude position determination. Reporting of the position coordinates for aircraft in the training site can be sent by telephone link or displayed locally in an convenient manner.

The calibration of each of the receive locations requires only that the clocks at each receive location be synchronized. The RTR master clock 67 time can be transmitted to each of the receive locations over the data links represented by transmit/receive stations 61 through 63. It will be recognized that to achieve accurate synchronism between remotely located clocks and the master clock 67, calibration shall be required at each receive station to compensate for path delay experienced by transmission of clock information from the master station to each of the receive stations.

Referring now to Figure 6, there is shown in greater detail how calibration of local clocks is effected at the remote receive locations which compensates for the path delay incurred over the communication links.

The receive portion of the data link station 34a is shown having an output which can be directly connected to the local clock 36 through an input 45 or to a path delay adjustment circuit 49a. Switch 52 can be controlled so that data identifying the clock frequency is transferred to the local clock 36 from the receive link 34a. Additionally, test signals sent over the receive link 34a may be routed via switch 52 through the path delay adjustment circuit 49a, through switch 52 back over the transmit link 34b portion of the station 34. During a calibration interval, the master station will transmit a tone over the wide band data link to the receive portion 34a of the remote data link station. The receive tone enters the path delay adjustment circuit 49a and through switch 52 is applied to the transmitter 34b of the wide band data link station. The communication path delay adjustment 49a and 49b are adjusted in tandem so that the path delay from the input of receiver 34a to the output of transmitter 34b shows no net phase shift to incoming and outgoing tones. With the path delay correction circuit 49b set to equal that of 49a, delays within the receive station are effectively compensated.

Thus, the retransmitted tone from transmitter 34b, when received at the master station, will include delays which are only from the data link path, principally resulting from the distance between receive and master station. At the master station, the incoming tones are measured with respect to the outgoing tone. Thus, an accurate measurement of the time delay between receive and transmit stations may be made. This quantity represents the two-way delay for the path length between master receive station and remote receive station. In transmitting a local clock time from the master station, this two-way delay is divided by two and a corrected local time is transmitted by the master to the receive local clock 36. At the remote stations, local clocks 36 are calibrated with a clock time corrected for path delay.

Each of the receive locations will have local clocks 36 calibrated so that the time of arrival of transponder replies will be loaded in a corresponding register 47c at each location. This time of arrival data may typically be as much as 20 bits wide and include the entire pair of replies, altitude and identity. The time of arrival may be measured against any of the reply bits which are in the register 47c.

The foregoing system makes use of transponder 27 which has previously been used on aircraft, together with a squitter generator 22 which can be conveniently mounted to a weapons carrying fixture on the aircraft.

As another technique for calibrating the receive clocks, a calibration transponder 9 may be located within the training area as is shown in Figure 1. The transponder 9 is also operated in a squitter mode, preferably at a lower squitter rate such as 1 transmission per second, emitting both an identity and altitude transmission which is received by each receive station 15-18. The distances between each of the receive stations and the transponder 9 is precisely known. Each receive station will note the time of arrival using its internal receive clock just as it does when tracking aircraft through the sector. The time of arrival for these transmissions is reported to the master station. As the distances to each station are known, an expected time of arrival for each of these distances is also known. The master station computer will compare the expected time of arrival data with actual time of arrival data. The master station can compute clock offset corrections for each receive station real time clock, and modify subsequent time of arrival information received from a target aircraft. This calibration technique does not require an outgoing data link from the master station to each receive station. Additionally, this permits verification of the tracking system operation before in flight measurements begin.

As an alternative embodiment to the foregoing, it should be noted that many military aircraft include both IFF and and TACAN navigation equipment. The TACAN transmitter on the aircraft will interrogate position location transponder on the ground. Rather than use a squitter transmitter, it is possible to initiate a mode C interrogation of the aircraft IFF transponder based on TACAN interrogation pulses.

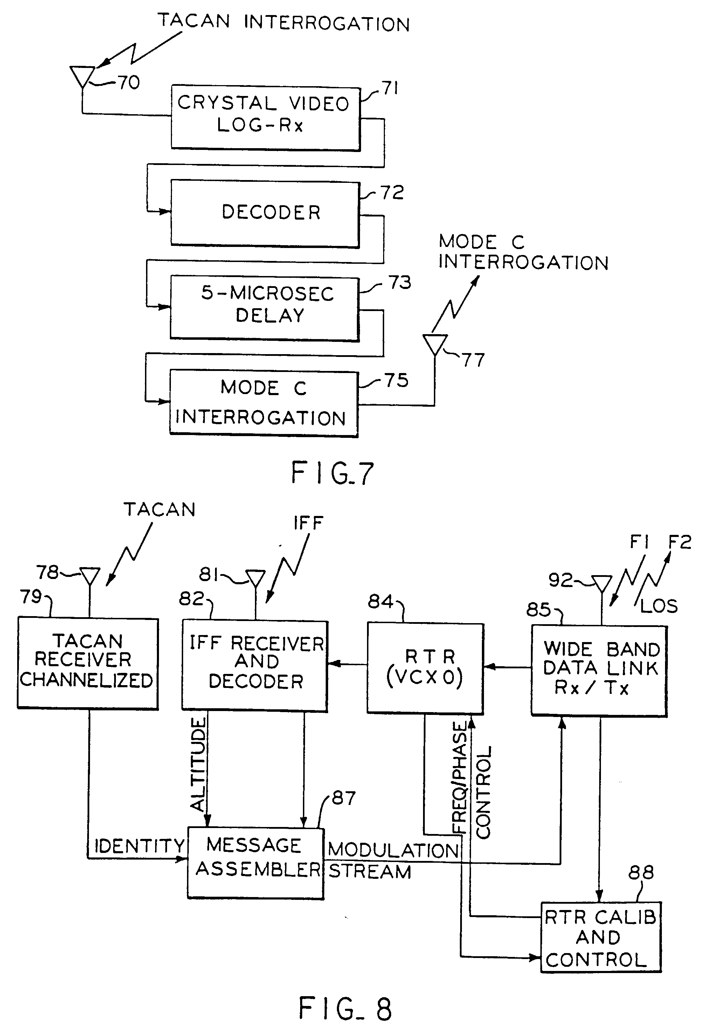

In this embodiment, a cross-link circuit as shown in Figure 7 may be employed, so that TACAN interrogations emitted by the aircraft are used to interrogate the IFF transponder.

A crystal video detector 71 is shown connected to a small receiving antenna 70. TACAN interrogation pulses which are RF pulses of several hundred watt magnitude are received by the detector 71. The resulting pulse therefrom is decoded in decoder 72. A delayed pulse provided by delay circuit 73 is used to initiate a mode C interrogation from a transmitter 75. Rather than keying the transmitter on an asychronous basis as was proposed in the earlier embodiment, mode C interrogation may be effected in response to a TACAN pulse. The mode C interrogation is supplied through antenna 77 as in the previous embodiment to interrogate the IFF transponder.

Using the TACAN interrogation pulses to trigger a mode C interrogation provides for an ability to identify transponder replies to the mode C interrogation without requiring a mode 1, 2 or 3 interrogation of the IFF transmitter.

As shown in Figure 8, the remote sites can include a TACAN receiver as well as an IFF receiver and decoder. The particular channel of the TACAN receiver, which receives a TACAN inquiry correlated with an IFF reply received at the receiving location, can be used to identify the aircraft. Since the TACAN inquiry initiates the IFF reply, they are time correlated, permitting the remote receiving site to correlate altitude with identity.

At the remote receiving site, a TACAN antenna 78 applies each received TACAN pulse to a TACAN receiver 79. Depending on the frequency of the TACAN pulse, the aircraft is identified. Different aircraft will be preassigned a different TACAN frequency.

The IFF antenna 81 at the remote receive site is connected to the IFF receiver and decoder. The altitude and time of arrival information is once again compiled by a message assembler 87. The real time clock 84 is calibrated with the calibration and control circuitry 88 as was described with respect to the previous embodiment. A wide band data link is provided by a data station 85. Calibration as well as modulated position data is transmitted via the wide band data link station 85 back to the master station.

Thus, in both embodiments it is possible to use existing IFF equipment and/or TACAN equipment to accurately locate an aircraft operating on a test site. Altitude, identity, longitudinal and lateral coordinates are known for the aircraft during the test in which the aircraft is steered through simulated fire control radar stations. The system permits this accurate location to be accomplished without burdening the aircraft with any additional equipment, other than a squitter transmitter or other means for interrogating the IFF transponder. However, this equipment overhead is minimal and may be conveniently carried on a weapons fixture on the aircraft.

Throughout the discussion of the previous embodiments, it was assumed that altitude information would be derived by the mode C reply from the IFF transponder aboard the aircraft. Those skilled in the art will recognize that if one of the receive stations is positioned in elevation higher than the remaining receive stations, it is possible to locate the altitude of the aircraft, using time of arrival methods. Thus, as a cross-check against altitude measurements from the IFF transponder, or as an independent calculation of altitude, the differences in height of each receive station permit not only longitudinal and latitudinal position coordinates to be derived but elevation coordinates as well.

The foregoing embodiment is exemplary only of a military training application for the invention. It is clear that the invention has applicability to other systems both military and non-military. An example of such other applications includes surveillance of airport geographical boundaries for the presence of unauthorized aircraft, as well as their longitude and latitude co-ordinates. Superior tracking and monitoring of these aircraft over conventional polar co-ordinate tracking systems is possible, permitting a higher degree of airport safety than is presently available.

## Claims

1. A system for tracking over an area an aircraft which is equipped with a transponder (27) adapted upon interrogation by a transmitter to emit a signal identifying the aircraft, said system comprising:
at least three ground stations (15-18) spaced apart from each other, said ground stations each being equipped with a receiver for receiving signals from said transponder (27);
a communication link (30,31) connecting said ground stations; and
means (66) for receiving information over said communication link identifying the times of arrival at said ground stations of a signal transmitted from said transponder (27) in response to interrogation thereof and for calculating from said times of arrival the position of said aircraft;
said system being characterized in that a squitter transmitter (22) is mounted on said aircraft for interrogating said transponder to cause said signal to be transmitted.

2. The system of claim 1 wherein the transponder (27) on the aircraft is an IFF transponder.

3. The system of claim 1 or 2 wherein said receiving and calculating means (66) is arranged to calculate the air speed and heading of said aircraft.

4. The system of any preceding claim further including a plurality of spaced apart simulated ground radar sources (8) against which said aircraft can conduct evasive manoeuvres.

5. The system of any preceding claim wherein said receiving and calculating means (66) includes a digital computer.

6. The system of any preceding claim wherein said communication link is two way between one of said ground stations (15) and the remaining ground stations (16-18), and said one ground station (15) is arranged to distribute clock synchronization data over said communication link to the remaining ground stations (16-18).

7. The system of claim 6 wherein the transponder (27) is arranged to provide altitude information in its emitted signals and a message assembler (47) is provided at said remaining ground stations (16-18) for compiling a message including a time of signal arrival and an altitude indication, said message assembler being arranged to transmit said message over said communication link to said one ground station (15).

8. The system of any preceding claim further comprising means (24) for disabling transmissions from said transponder (27) when said aircraft is on the ground.

9. The system of any preceding claim wherein said transmitter (22) is mounted to a weapon support on said aircraft.

10. The system of any preceding claim wherein said transmitter (22) is arranged to be enabled by a random trigger generator (21) provided on the aircraft.

11. The system of any of claims 1 to 9 wherein said transmitter (22) is arranged to be enabled by a TACAN interrogation generator that is provided on said aircraft.

12. The system of claim 11 wherein said transmitter (22) is arranged to be enabled in response to a single TACAN pulse frequency assigned to said aircraft.

13. The system of claim 12 wherein each ground station (15-18) is capable of receiving a plurality of TACAN pulse frequencies, and is adapted to identify each aircraft according to the received TACAN pulse frequency.

14. The system of any preceding claim further comprising:
a test transponder (9) located at a known distance from each ground station (15-18); and
means for triggering said test transponder into a transmission mode, whereby time of arrival test information is made available for enabling errors in time of arrival determinations made at each receiving station to be corrected.

15. The system of claim 14 wherein said triggering means is arranged to enable said test transponder at a rate less than that at which the aircraft transponder is arranged to be enabled.

16. A method of tracking over an area an aircraft which is equipped with a transponder (27) adapted upon interrogation by a transmitter to emit a signal identifying the aircraft, said method comprising:
providing at least three ground stations (15-18) at spaced-apart locations of said area, said ground stations each being equipped with a receiver for receiving signals from said transponder and being connected by a communication link (30-31);
periodically interrogating the on-board transponder (27) of an aircraft in the area so that the transponder periodically transmits said identification signal;
deriving time of arrival information indicative of the times of arrival at said ground stations of said signal transmitted from said transponder; and
assembling said times of arrival information over said communication link and calculating therefrom the position of said aircraft;
the method being characterized in that the aircraft transponder is interrogated by a squitter transmitter (22) on the aircraft.

## Patentansprüche

1. System zum Verfolgen eines Flugzeugs über ein Gebiet, wobei das Flugzeug mit einem Transponder (27) ausgerüstet ist, der so ausgelegt ist, daß er bei Abfrage durch einen Sender ein das Flugzeug kennzeichnendes Signal aussendet, umfassend
wenigstens drei in Abstand voneinander angeordnete, jeweils mit einem Empfänger zum Empfangen von Signalen des Transponders (27) ausgerüstete Bodenstationen (15 - 18),
einen die Bodenstationen verbindenden Nachrichtenkanal (30, 31), und
eine Einrichtung (66) zum Empfangen von Informationen über den Nachrichtenkanal, die die Ankunftszeiten eines von dem Transponder (27) auf dessen Abfrage hin ausgesendeten Signals an den Bodenstationen kennzeichnen, sowie zum Berechnen der Position des Flugzeugs aus den Ankunftszeiten,
dadurch **gekennzeichnet,** daß am Flugzeug ein Transponder-Auslösesender (22) zum Abfragen des Transponders, um das Aussenden des Signals zu veranlassen, angebracht ist.

2. System nach Anspruch 1, wobei der Transponder (27) am Flugzeug ein IFF-Transponder ist.

3. System nach Anspruch 1 oder 2, wobei die Empfangs- und Recheneinrichtung (66) so ausgelegt ist, daß sie die Geschwindigkeit des Flugzeugs gegenüber Luft und seinen Kurs berechnet.

4. System nach einem der vorhergehenden Ansprüche mit mehreren in Abstand voneinander angeordneten simulierten Boden-Radarquellen (8), gegenüber denen das Flugzeug Ausweichmanöver vornehmen kann.

5. System nach einem der vorhergehenden Ansprüche, wobei die Empfangs- und Recheneinrichtung (66) einen Digitalcomputer aufweist.

6. System nach einem der vorhergehenden Ansprüche, wobei der Nachrichtenkanal zwischen einer der Bodenstationen (15) und den übrigen Bodenstationen (16 - 18) bidirektional und die besagte eine Bodenstation (15) so ausgelegt ist, daß sie über diesen Nachrichtenkanal Taktsynchronisationsdaten an die übrigen Bodenstationen (16 - 18) überträgt.

7. System nach Anspruch 6, wobei der Transponder (27) so ausgelegt ist, daß er in seinen ausgesendeten Signalen Höheninformationen aufweist, wobei an den übrigen Bodenstationen (16 - 18) ein Nachrichten-Assembler (47) zum Übersetzen einer einen Signalankunftszeit- und einen Höhenhinweis enthaltenden Nachricht vorgesehen ist, und wobei der Nachrichten-Assembler so ausgelegt ist, daß er die Nachricht über den Nachrichtenkanal an die eine Bodenstation (15) überträgt.

8. System nach einem der vorhergehenden Ansprüche mit einer Einrichtung (24), die Sendevorgänge des Transponders (27) verhindert, wenn sich das Flugzeug am Boden befindet.

9. System nach einem der vorhergehenden Ansprüche, wobei der Sender (22) an einem Waffenträger des Flugzeugs befestigt ist.

10. System nach einem der vorhergehenden Ansprüche, wobei der Sender (22) durch einen am Flugzeug vorgesehenen Zufalls-Auslösegenerator (21) aktivierbar ist.

11. System nach einem der Ansprüche 1 bis 9, wobei der Sender (22) durch einen am Flugzeug vorgesehenen TACAN-Abfragegenerator aktivierbar ist.

12. System nach Anspruch 11, wobei der Sender (22) auf eine einzige, dem Flugzeug zugeordnete TACAN-Impulsfrequenz ansprechend aktivierbar ist.

13. System nach Anspruch 12, wobei jede Bodenstation (15 - 18) mehrere TACAN-Impulsfrequenzen empfangen kann und so ausgelegt ist, daß sie das jeweilige Flugzeug anhand der empfangenden TACAN-Impulsfrequenz erkennt.

14. System nach einem der vorhergehenden Ansprüche, mit
einem in bekanntem Abstand von jeder Bodenstation (15 - 18) angeordneten Prüftransponder (9), und
einer Auslöseeinrichtung, die den Prüftransponder in einen Sendemodus versetzt, wodurch eine Ankunftszeit-Prüfinformation verfügbar gemacht wird, um eine Korrektur von Fehlern in den an jeder Empfangsstation durchgeführten Ankunftszeitbestimmungen zu aktivieren.

15. System nach Anspruch 14, wobei die Auslöseeinrichtung so ausgelegt ist, daß sie den Prüftransponder bei einer geringeren Rate als derjenigen aktiviert, für die der Flugzeug-Transponder ausgelegt ist.

16. Verfahren zum Verfolgen eines Flugzeugs über ein Gebiet, wobei das Flugzeug mit einem Transponder (27) ausgerüstet ist, der so ausgelegt ist, daß er bei Abfrage durch einen Sender ein das Flugzeug kennzeichnendes Signal aussendet, wobei
in dem Gebiet in Abstand voneinander wenigstens drei Bodenstationen (15 - 18) angeordnet werden, deren jede mit einem Empfänger zum Empfangen von Signalen des Transponders ausgerüstet ist und die durch einen Nachrichtenkanal (30 - 31) miteinander verbunden sind,
der an Bord eines sich in dem Gebiet aufhaltenden Flugzeugs vorhandene Transponder (27) periodisch abfragt wird, so daß er das Erkennungssignal periodisch aussendet,
Ankunftszeitinformationen gewonnen werden, die die Ankunftszeiten der von dem Transponder ausgesendeten Signale an den Bodenstationen angeben, und
die Ankunftszeitinformationen über den Nachrichtenkanal zusammengestellt und die daraus Position des Flugzeugs berechnet wird,
dadurch **gekennzeichnet,** daß der Flugzeug-Transponder durch einen Transponder-Auslösesender (22) am Flugzeug abgefragt wird.

## Revendications

1. Un système pour poursuivre dans une région un avion qui est équipé d'un répondeur (27) prévu pour émettre, suite à une interrogation par un transmetteur, un signal identifiant l'avion, lequel système comprend :
au moins trois stations terrestres (15-18) espacées les unes des autres, lesdites stations terrestres étant chacune équipée d'un récepteur pour recevoir des signaux provenant dudit répondeur (27) ;
une liaison de transmission de données (30, 31) reliant lesdites stations terrestres ; et
un moyen (66) pour recevoir, par l'intermédiaire de ladite liaison de transmission de données, des informations identifiant les instants d'arrivée auxdites stations terrestres d'un signal transmis à partir dudit répondeur (27) en réponse à l'interrogation de celui-ci, et pour calculer à partir de ces instants d'arrivée la position dudit avion ;
ledit système étant caractérisé en ce qu'un transmetteur de déclenchement aléatoire (22) est monté sur ledit avion pour interroger ledit répondeur afin de lui faire émettre ledit signal.

2. Le système selon la revendication 1, dans lequel le répondeur (27) dans l'avion est un répondeur IFF.

3. Le système selon la revendication 1 ou 2, dans lequel ledit moyen de réception et de calcul (66) est arrangé pour calculer la vitesse de l'air et le cap dudit avion.

4. Le système selon l'une quelconque des revendications précédentes, comprenant en outre une pluralité de sources radar terrestres simulées (8), à l'encontre desquelles ledit avion peut effectuer des manoeuvres de fuite.

5. Le système selon l'une quelconque des revendications précedentes, dans lequel ledit moyen de réception et de calcul (66) comprend un ordinateur.

6. Le système selon l'une quelconque des revendications précédentes, dans lequel ladite liaison de transmission de données est bidirectionnelle entre l'une déterminée (15) desdites stations terrestres et les autres stations terrestres (16-18), et ladite station terrestre déterminée (15) est arrangée pour distribuer des données de synchronisation d'horloge, par l'intermédiaire de ladite liaison de transmission de données, aux autres stations terrestres (16-18).

7. Le système selon la revendication 6, dans lequel le répondeur (27) est arrangé pour fournir des informations d'altitude dans les signaux qu'il émet, et un assembleur de message (47) est prévu dans lesdites autres stations terrestres (16-18) pour compiler un message comprenant un instant d'arrivée de signal et une indication d'altitude, ledit assembleur de message étant arrangé pour transmettre ledit message, par l'intermédiaire de ladite liaison de transmission de données, à ladite station terrestre déterminée (15).

8. Le système selon l'une quelconque des revendications précédentes, comprenant en outre un moyen (24) pour invalider les émissions dudit répondeur (27) lorsque ledit avion est au sol.

9. Le système selon l'une quelconque des revendications précédentes, dans lequel ledit transmetteur (22) est monté sur un support d'arme dudit avion.

10. Le système selon l'une quelconque des revendications précédentes, dans lequel ledit transmetteur (22) est arrangé pour être commandé par un générateur de déclenchement aléatoire (21) prévu sur l'avion.

11. Le système selon l'une quelconque des revendications 1 à 9, dans lequel le transmetteur (22) est arrangé pour être commandé par un générateur d'interrogation TACAN qui est prévu sur ledit avion.

12. Le système selon la revendication 11, dans lequel ledit transmetteur (22) est arrangé pour être commandé en réponse à une fréquence d'impulsions TACAN unique attribuée audit avion.

13. Le système selon la revendication 12, dans lequel chaque station terrestre (15-18) est apte à recevoir une pluralité de fréquences d'impulsions TACAN, et est adaptée pour identifier chaque avion en fonction de la fréquence d'impulsions TACAN reçue.

14. Le système selon l'une quelconque des revendications précédentes, comprenant en outre :
un répondeur de test (9) placé à une distance connue de chaque station terrestre (15-18) ; et
un moyen pour déclencher ledit répondeur de test en mode émission, afin de disposer d'informations de test d'instant d'arrivée pour permettre de corriger des erreurs dans les déterminations d'instant d'arrivée faites à chaque station de réception.

15. Le système selon la revendication 14, dans lequel ledit moyen de déclenchement est arrangé pour commander ledit répondeur de test à un rythme inférieur à celui auquel est soumis le répondeur de l'avion.

16. Un procédé pour poursuivre dans une région un avion qui est équipé d'un répondeur (27) prévu pour émettre, suite à une interrogation par un transmetteur, un signal identifiant l'avion, lequel procédé comprend les étapes suivantes :
prévoir au moins trois stations terrestres (15-18) en des lieux espacés de ladite région, lesdites stations terrestres étant chacune équipée d'un récepteur pour recevoir des signaux provenant dudit répondeur, et étant reliées par une liaison de transmission de données (30-31) ;
interroger périodiquement le répondeur (27) à bord d'un avion se trouvant dans la région, de telle sorte que le répondeur émette périodiquement ledit signal d'identification ;
déduire, à partir desdits signaux provenant dudit répondeur, des informations d'instant d'arrivée indicatrices des instants d'arrivée auxdites stations terrestres ; et
assembler lesdites informations d'instants d'arrivée par l'intermédiaire de ladite liaison de communication de données et calculer à partir de celles-ci la position dudit avion ;
le procédé étant caractérisé en ce que le répondeur de l'avion est interrogé par un transmetteur de déclenchement aléatoire (22) se trouvant sur l'avion.
